# EUROPÄISCHE PATENTSCHRIFT

(11) **EP 0 417 660 B1**
(45) Veröffentlichungstag und Bekanntmachung des Hinweises auf die Patenterteilung: **13.04.1994**
(21) Anmeldenummer: 90117268.4
(22) Anmeldetag: 07.09.1990
(51) Int. Cl.: B60Q 3/04, G01D 11/28

(54) **Vorrichtung zur Aufhellung von Cockpitinstrumenten**
Device for the illumination of cockpit instruments
Dispositifs d'éclairage d'instruments de cockpit

(30) Priorität: 12.09.1989 DE 3930359
(43) Veröffentlichungstag der Anmeldung: 20.03.1991
(73) Patentinhaber: Bodenseewerk Gerätetechnik GmbH, 88662 Überlingen (DE)
(72) Erfinder: Langner, Klaus, W-7770 Überlingen (DE); Runge, Klaus, W-7772 Uhldingen 1 (DE)
(74) Vertreter: Weisse, Jürgen, Dipl.-Phys. Patentanwalt

(56) Entgegenhaltungen:
- EP-A- 0 088 281
- GB-A- 2 056 740
- US-A- 4 072 406
- US-A- 4 729 634

## Beschreibung

Die Erfindung betrifft eine Vorrichtung zur Aufhellung von Cockpit-Instrumenten durch Tageslicht, enthaltend eine Lichtdurchtrittsöffnung für durch Frontfenster fallendes Tageslicht in einem Abdeckschirm und einen der Lichtdurchtrittsöffnung zugeordneten Umlenkspiegel für das Tageslicht zur Aufhellung der Cockpit-Instrumente.

Cockpits von Flugzeugen sind durch wechselnde Flugbedingungen ständig wechselnden Lichteinfallsrichtungen und Lichtintensitäten ausgesetzt. Es sind verschiedene Vorkehrungen getroffen worden, um Blendungen und Reflexionen zu vermeiden. Aus diesem Grunde ist beispielsweise das Cockpit in dunklen Farben gehalten. Der Lichteinfall in das Cockpit ist reduziert. Dadurch ist der Ausblick aus dem Flugzeug optimiert. Es ergeben sich aber Schwierigkeiten, die Cockpit-Instrumente bei Tag abzulesen. Das Auge des Piloten ist an die starke Helligkeit des durch das Frontfenster des Cockpits einfallenden Lichtes adaptiert. Durch die Helligkeitsdifferenz zwischen dem durch das Frontfenster beobachteten Gesichtsfeld und dem dunklen Cockpit wird die Ablesung der Instrumente schwierig.

Die integrierte Nachtbeleuchtung der Cockpit-Instrumente ist für dunkel angepasste Augen ausgelegt. Die Nachtbeleuchtung kann im Tagbetrieb kaum Beiträge zur Verbesserung der Ablesbarkeit liefern. Eine Erhöhung der Beleuchtungsstärke einer solchen "aktiven" Instrumentenbeleuchtung würde zusätzlichen Energiebedarf, zusätzliche Wärmeproduktion sowie mehr und stärkere Verkabelungen und somit auch mehr Gewicht bedingen.

Die DE-A-2 944 537 betrifft eine solche Instrumenten-Beleuchtungseinrichtung der vorgenannten Art zum Beispiel in einem Flugzeug. Darin ist zusätzlich zu einer inneren Lichtquelle eine Einrichtung vorhanden, durch die Tageslicht auf die Instrumente gerichtet wird. Für diesen Zweck ist ein Lichtleitteil vorgesehen, dessen eine Kantenfläche sich durch eine obere Polsterung oder einen Blendschutz gegen das Frontfenster erstreckt und durch die einfallendes Tageslicht in den Lichtleitteil eingeleitet wird. Der Lichtleitteil bildet eine Platte, die hinter den Skalenblättern des Armaturenbrettes verläuft; ihre den Skalenblättern abgewandte Rückseite ist eine reflektierende Fläche und ihre den Skalenblättern zugewandte Vorderseite ist eine das einfallende umgelenkte Tageslicht emittierende Fläche. Bei dieser Anordnung wird somit das einfallende Tageslicht hinter die dem Betrachter zugewandte Seite des Instrumentes geleitet, und die Aufhellung wird durch das Tageslicht bewirkt, das als Durchlicht durch das Skalenblatt hindurchfällt.

Der Erfindung liegt die Aufgabe zugrunde, eine Vorrichtung der eingangs genannten Art zu schaffen, deren Einbau keinen Eingriff in die Instrumententafel erfordert.

Erfindungsgemäss wird diese Aufgabe dadurch gelöst, dass die Lichtdurchtrittsöffnung und der Umlenkspiegel in Blickrichtung des Betrachters vor den Skalen der Cockpit-Instrumente angeordnet sind und dass das Tageslicht durch den Umlenkspiegel als Auflicht auf die Cockpit-Instrumente umlenkbar ist.

Nach der Erfindung erfolgt somit die Aufhellung der Cockpit-Instrumente nicht im Durchlicht sondern im Auflicht unter Ausnutzung des Tageslichtes. Diese Aufhellung der Cockpit-Instrumente ist automatisch an die Aussenhelligkeit angepasst und damit an den Adaptionszustand des Auges. Es sind dazu keine Ein- oder Umbauten an der die Cockpit-Instrumente enthaltenden Instrumententafel notwendig.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert:
- Fig. 1: zeigt schematisch einen Vertikalschnitt durch einen Teil des Cockpits mit einem Cockpit-Instrument und einem Abdeckschirm, der ein Ausführungsbeispiel der erfindungsgemässen Aufhellungsvorrichtung enthält;
- Fig. 2: ist eine abgewandelte Ausführung in einer Darstellung ähnlich Fig. 1, bei welcher nur eine bestimmte Richtung des durch das Frontfenster einfallenden Lichtes für die Aufhellung der Cockpit-Instrumente benutzt wird.
- Fig. 3, 4 und 5: zeigen weitere Abwandlungen des Ausführungsbeispieles.

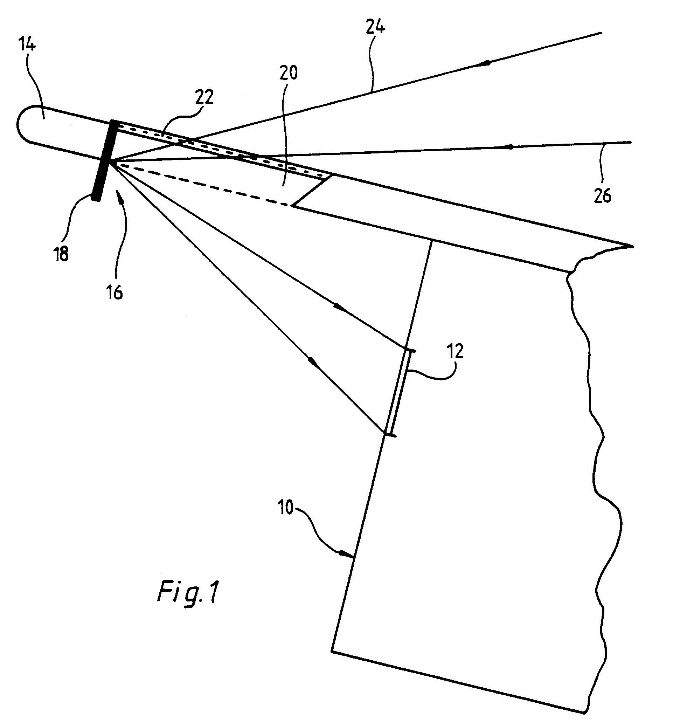

In Fig. 1 ist mit 10 ein Instrumentenfeld im Cockpit eines Flugzeuges bezeichnet. Das Instrumentenfeld 10 enthält ein Cockpit-Instrument 12 in Form einer Flüssigkristallanzeige. Über dem Instrumentenfeld 10 ist ein Abdeckschirm 14 angeordnet. Über dem Abdeckschirm 14 befindet sich das (nicht dargestellte) Frontfenster des Cockpits.

Das Cockpit-Instrument 12 wird durch eine Aufhellvorrichtung beleuchtet. Die Aufhellvorrichtung ist generell mit 16 bezeichnet. Durch diese Aufhellvorrichtung 16 kann Tageslicht aus dem Frontfenster des Cockpits gezielt auf das Cockpit-Instrument 12 gerichtet werden. Die Aufhellvorrichtung 16 enthält einen Umlenkspiegel 18. Der Umlenkspiegel 18 ist in den Abdeckschirm 14 eingesetzt. Zu diesem Zweck weist der Abdeckschirm 14 eine Lichtdurchtrittsöffnung 20 auf. Die Lichtdurchtrittsöffnung 20 ist durch eine lichtdurchlässige Abdeckung 22 abgedeckt. Die Abdeckung 22 kann z.B. ein Deckel aus Acrylglas oder ein Rost sein. Der Umlenkspiegel 18 besteht aus gewalztem, überpoliertem Aluminiumblech.

Wie aus Fig. 1 ersichtlich ist, fällt Licht, welches durch das Frontfenster des Cockpits eintritt, durch die Lichtdurchtrittsöffnung 20 hindurch auf den Umlenkspiegel 18. Das Licht zwischen den Strahlen 24 und 26 wird auf das Cockpit-Instrument 12 geleitet. Dadurch erfolgt eine Aufhellung des Cockpit-Instruments 12. Diese Aufhellung tritt auch ein, wenn das Cockpit-Instrument 12 dicht unter dem Abdeckschirm 14 sitzt, wie dies hier der Fall ist. Die Aufhellung ist um so stärker, je intensiver das durch das Frontfenster eintretende Licht ist. Sie passt sich also automatisch an die Helligkeit des vom Piloten beobachteten Gesichtsfeldes an.

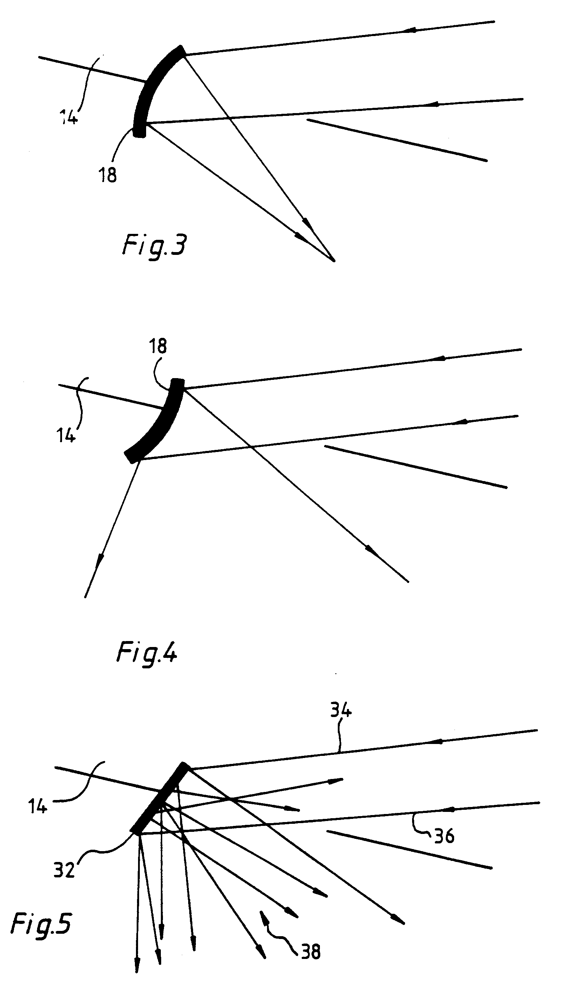

Der Umlenkspiegel kann ein Planspiegel sein, wie dies in Fig. 1 dargestellt ist. Der Umlenkspiegel 18 kann aber auch konvex oder konkav sein. Der Umlenkspiegel 18 kann im Horizontalschnitt eine andere Krümmung aufweisen als im Vertikalschnitt. Dadurch können die einfallenden Lichtstrahlen in der gewünschten Weise auf das Instrumentenfeld 10 verteilt werden. Das ist in Fig. 3 und 4 schematisch dargestellt.

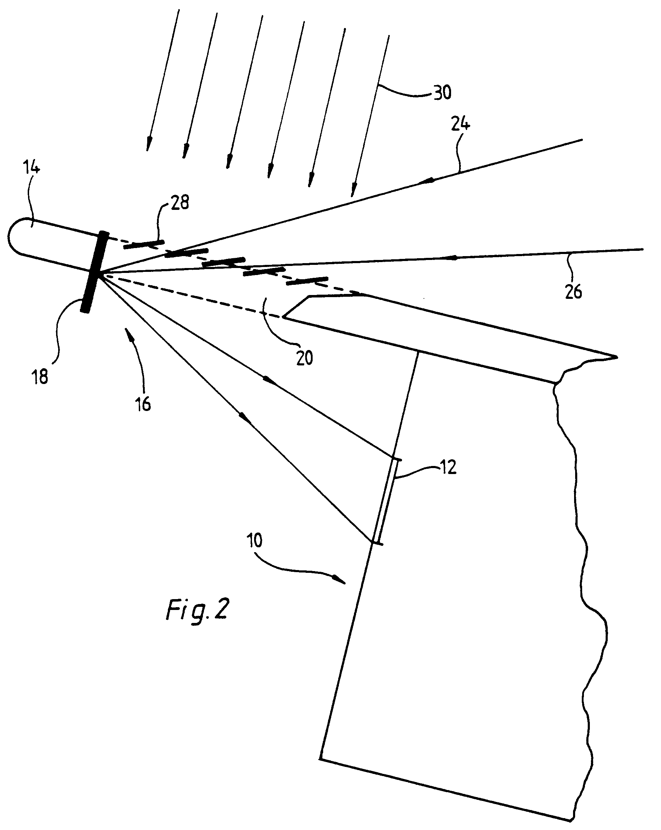

Fig. 2 zeigt eine Anordnung, die weitgehend mit der Anordnung nach Fig. 1 übereinstimmt. Entsprechende Teile sind mit den gleichen Bezugszeichen versehen wie in Fig. 1. Statt durch einen Deckel aus Acrylglas ist die Lichtdurchtrittsöffnung 20 bei der Ausführung nach Fig. 2 durch eine Jalousie 28 abgedeckt. Die Jalousie 28 lässt nur Strahlen 24 und 26 aus einem bestimmten Winkelbereich hindurchtreten. Dadurch wird Lichteinfall aus unerwünschten Einfallsrichtungen 30, zum Beispiel von oben, verhindert.

Bei der Ausführung nach Fig. 5 enthält die Aufhellvorrichtung statt des Umlenkspiegels 18 ein diffus reflektierendes Glied 32, welches vom Tageslicht aus den Frontfenstern des Cockpits beaufschlagt ist und dieses diffus gegen die Cockpit-Instrumente reflektiert. In Fig. 5 sind mit 34 und 36 einfallende Strahlen des Tageslichts bezeichnet. Die diffus reflektierenden Strahlen sind mit 38 gekennzeichnet. Im übrigen ist die Anordnung nach Fig. 5 die gleiche wie die Anordnung nach Fig. 1.

Die vorstehenden Aufhellungsvorrichtungen sind im Zusammenhang mit der Instrumententafel eines Flugzeuges beschrieben worden. Aufhellungsvorrichtungen dieser Art können in gleicher oder entsprechender Weise zu dem gleichen Zweck in Verbindung mit Instrumententafeln anderer Fahrzeuge oder Anlagen eingesetzt werden.

## Patentansprüche

1. Vorrichtung zur Aufhellung von Cockpit-Instrumenten durch Tageslicht, enthaltend eine Lichtdurchtrittsöffnung (20) für durch Frontfenster fallendes Tageslicht in einem Abdeckschirm (14) und eine der Lichtdurchtrittsöffnung (20) zugeordnetes, reflektierendes Umlenkglied (18, 32) für das Tageslicht zur Aufhellung der Cockpit-Instrumente,
**dadurch gekennzeichnet, dass**
die Lichtdurchtrittsöffnung (20) und das reflektierende Umlenkglied (18, 32) in Blickrichtung des Betrachters vor den Skalen der Cockpit-Instrumente (12) angeordnet sind und dass das Tageslicht durch das reflektierende Umlenkglied (18, 32) als Auflicht auf die Cockpit-Instrument umlenkbar ist.

2. Vorrichtung nach Anspruch 1, **dadurch gekennzeichnet, dass** das reflektierende Umlenkglied (18) am inneren Rand der Öffnung (20) angebracht ist.

3. Vorrichtung nach Anspruch 2, **dadurch gekennzeichnet, dass** die Lichtdurchtrittsöffnung (20) durch eine lichtdurchlässige Abdeckung (22) abgedeckt ist.

4. Vorrichtung nach einem der Ansprüche 1 bis 3, **dadurch gekennzeichnet, dass** das reflektierende Umlenkglied (18) ein Planspiegel ist.

5. Vorrichtung nach einem der Ansprüche 1 bis 3, **dadurch gekennzeichnet, dass** das reflektierende Umlenkglied ein konvexer Umlenkspiegel ist.

6. Vorrichtung nach einem der Ansprüche 1 bis 3, **dadurch gekennzeichnet, dass** das reflektierende Umlenkglied ein konkaver Umlenkspiegel ist.

7. Vorrichtung nach Anspruch 5 oder 6, **dadurch gekennzeichnet, dass** der Umlenkspiegel (18) im Horizontalschnitt eine andere Krümmung aufweist als im Vertikalschnitt.

8. Vorrichtung nach einem der Ansprüche 1 bis 7, **gekennzeichnet durch** eine Jalousie (28) im Strahlengang der Aufhelleinrichtung (16), wobei die Jalousie (28) den zugelassenen Lichtdurchtrittswinkel beeinflusst.

9. Vorrichtung nach einem der Ansprüche 1 bis 8, **dadurch gekennzeichnet, dass** der Umlenkspiegel (18) aus gewalztem, überpolierten Aluminiumblech besteht.

10. Vorrichtung nach Anspruch 1, **dadurch gekennzeichnet, dass** das reflektierende Umlenkglied ein diffus reflektierendes Glied (32) ist, das vom Tageslicht aus den Frontfenstern des Cockpits beaufschlagt ist und dieses diffus gegen die Cockpit-Instrumente reflektiert.

## Claims

1. Device for illuminating cockpit instruments by daylight, comprising a light passage opening (20) for daylight passing through front windows in a cover screen (14) and a reflecting deviating member (18, 32) associated with the light passage opening (20) for the daylight for illuminating the cockpit instruments,
**characterized in that**
the light passage opening (20) and the reflecting deviating member (18, 32) are arranged, in the line of vision of the observer, in front of the scales of the cockpit instruments (12) and in that the reflecting deviating member (18, 32) is adapted to deviate the daylight as incident light to the cockpit instruments.

2. Device as set forth in claim 1, **characterized in that** the reflecting deviating member (18) is attached at the inner edge of the opening (20).

3. Device as set forth in claim 2, **characterized in that** the light passage opening (20) is covered by a transparent covering (22).

4. Device as set forth in anyone of the claims 1 to 3, **characterized in that** the reflecting deviating member (18) is a plane mirror (18).

5. Device as set forth in anyone of the claims 1 to 3, **characterized in that** the reflecting deviating member is a convex deviating mirror.

6. Device as set forth in anyone of the claims 1 to 3, **characterized in that** the reflecting deviating member is a concave deviating mirror.

7. Device as set forth in claim 5 or 6, **characterized in that** the deviating mirror (18) has different curvatures in the horizontal sectional view and in the vertical sectional view.

8. Device as set forth in anyone of the claims 1 to 7, **characterized by** a parallel lamella-type light stop (28) in the path of rays of the illuminating device (16), the ligt stop (28) affecting the allowed light passage angle.

9. Device as set forth in anyone of the claims 1 to 8, **characterized in that** the deviating mirror (18) consists of rolled polished-over aluminum sheet.

10. Device as set forth in claim 1, **characterized in that** the reflecting deviating member is a diffusedly reflecting member (32) to which the daylight from the front windows of the cockpit is applied and which reflects this daylight diffusedly towards the cockpit instruments.

## Revendications

1. Dispositif destiné à l'éclaircissage d'instruments de cockpit par la lumière du jour, comprenant une ouverture de passage de lumière (20) pour la lumière du jour tombant par la fenêtre frontale dans un écran de couverture (14), et un membre de déviation (18, 32) réfléchissant associé à l'ouverture de passage de lumière (20) pour la lumière du jour afin d'éclaircir les instruments de cockpit,
**caractérisé par le fait que**
l'ouverture de passage de lumière (20) et le membre de déviation (18, 32) sont disposés, dans la direction de vue de l'observateur, devant les gammes des instruments de cockpit (12), et que la lumière du jour est déviable par le membre de déviation (18, 32) réfléchissant comme éclairage incident sur les instruments de cockpit.

2. Dispositif selon la revendication 1, **caractérisé par le fait que** le membre de déviation (18) réfléchissant est disposé sur le bord intérieur de l'ouverture (20).

3. Dispositif selon la revendication 2, **caractérisé par le fait que** l'ouverture de passage de lumière (20) est couverte par une couverture transparente (22).

4. Dispositif selon l'une des revendications 1 à 3, **caractérisé par le fait que** le membre de déviation (18) réfléchissant est un miroir plan.

5. Dispositif selon l'une des revendications 1 à 3, **caractérisé par le fait que** le membre de déviation réfléchissant est un miroir de déviation convexe.

6. Dispositif selon l'une des revendications 1 à 3, **caractérisé par le fait que** le membre de déviation réfléchissant est un miroir de déviation concave.

7. Dispositif selon la revendication 5 ou 6, **caractérisé par le fait que** le miroir de déviation (18) présente une autre courbure dans la coupe horizontale que dans la coupe verticale.

8. Dispositif selon l'une des revendications 1 à 7, **caractérisé par** une jalousie (28) dans la voie des rayons du dispositif d''éclaircissage (16), la jalousie (28) influant sur l'angle de passage de lumière admis.

9. Dispositif selon l'une des revendications 1 à 8, **caractérisé par le fait que** le miroir de déviation (18) est fait de tôle d'aluminium laminé poli.

10. Dispositif selon la revendication 1, **caractérisé par le fait que** le membre de déviation réfléchissant est un membre (32) à réflexion diffuse sur lequel tombe la lumière du jour des fenêtres frontales du cockpit et qui la réfléchit de facon diffuse contre les instruments du cockpit.
